# FASCICULE DE BREVET EUROPEEN

(11) **EP 1 229 624 B1**
(45) Date de publication et mention de la délivrance du brevet: **15.08.2012**
(21) Numéro de dépôt: 02290233.2
(22) Date de dépôt: 01.02.2002
(51) Int. Cl.: H02G 3/04

(54) **Accessoire pour goulotte et ensemble comprenant un tel accessoire et une goulotte dont le socle est spécialement adapté audit accessoire**
Kabelrinnenzusatz, Anordnung ausgerüstet mit einem solchen Zusatz und Rinne mit angepasstem Sockel
Cable ducting accessory, assembly with such an accessory and ducting with base adapted to the accessory

(30) Priorité: 05.02.2001 FR 0101501
(43) Date de publication de la demande: 07.08.2002
(73) Titulaire: Legrand France, 87000 Limoges (FR); Legrand SNC, 87000 Limoges (FR)
(72) Inventeur: Jadaud, Alain, 72240 Tennie (FR); Gautier, Bruno, 72140 Sille le Guillaume (FR)
(74) Mandataire: Santarelli

(56) Documents cités:
- WO-A-98/10499
- DE-A- 19 840 832
- DE-U- 7 803 034

## Description

La présente invention concerne un accessoire pour goulotte comprenant un corps pourvu, à l'une au moins de ses extrémités, de moyens d'assujettissement par lesquels il est apte à être rapporté localement sur une paroi longitudinale du socle d'une telle goulotte, telle que par exemple une cloison interne ou une aile latérale de ce socle.

On entend ici par accessoire tout type d'accessoires ou supports pouvant s'étendre d'une paroi longitudinale à l'autre du socle de la goulotte, tels que par exemple des agrafes ou des supports pour appareillage électrique. Il peut également s'agir de supports pour accessoire de finition tels que des jonctions, des angles ou des dérivations.

On entend également par accessoire, un accessoire à fixer individuellement à l'intérieur d'une aile latérale ou d'une cloison du socle de la goulotte, comme une éclisse, servant de jonction de socles juxtaposés et procurant un maintien en position de l'extrémité aboutée, lors de la fixation de l'extrémité libre.

On connaît déjà, notamment des documents GB 1 021 871, US 4 602 124, US 4 589 449, DE 34 41 377 et DE 93 17 739.9, des accessoires à mettre en place entre les ailes latérales d'un socle de goulotte, en coinçant leurs deux extrémités libres dans des logements prévus à cet effet sur lesdites ailes latérales.

Pour effectuer la mise en place et le retrait d'un tel accessoire du socle de la goulotte, il est alors nécessaire soit d'écarter les ailes latérales du socle, soit de fléchir l'accessoire qui doit présenter à cet effet une certaine souplesse.

On connaît également du document FR 2 133 705 un accessoire d'angle qui comprend, pour sa mise en place sur les ailes latérales du socle de la goulotte, des languettes d'encliquetage présentant des bourrelets aptes à être positionnés par encliquetage dans des logements, ces bourrelets étant accessibles depuis l'extérieur du socle de la goulotte à l'aide de la pointe d'un outil au travers de fenêtres prévues sur ledit accessoire.

On connaît également du document DE 35 34 669 une agrafe à mettre en place entre les ailes latérales d'un socle de goulotte au moyen de crochets prévus à chaque extrémité de ladite agrafe et reliés au corps de l'agrafe par des pattes flexibles accessibles depuis l'extérieur pour dégager les crochets des logements prévus sous les retours des ailes latérales dudit socle.

Ici, chaque patte flexible comprend, à son extrémité libre, le crochet, et le dégagement du crochet dudit logement s'effectue en exerçant une pression sur ladite patte flexible au travers de la fenêtre prévue dans le corps de l'agrafe, pour la faire basculer vers l'intérieur du socle de la goulotte.

Enfin, on connaît du document WO 98/10499 un accessoire dont les moyens d'assujettissement à la paroi longitudinale correspondante du socle de la goulotte comprennent une poignée et un corps apte à se loger dans un logement formé par un retour en équerre de ladite paroi longitudinale et à se bloquer dans ce logement à l'aide d'un épaulement venant en appui contre un épaulement complémentaire. En outre, la poignée comporte une surface grenée ou dentée permettant l'appui d'un doigt pour la fléchir et dégager ainsi l'épaulement de l'épaulement complémentaire.

Vis-à-vis de l'état de la technique précité, la présente invention propose un nouvel accessoire pour goulotte présentant une nouvelle disposition de moyens d'assujettissement permettant la mise en place et le retrait de l'accessoire de manière simple et rapide dans tout type de socles de goulottes sans devoir écarter les ailes latérales ou les cloisons entre lesquelles il intervient.

Plus particulièrement, la présente invention propose un accessoire tel que défini dans le préambule de la revendication 1, caractérisé en ce que ladite languette d'actionnement est accessible depuis l'extérieur du socle de la goulotte et apte à être tirée selon sa direction longitudinale d'orientation pour dégager du logement ladite extrémité libre de ladite patte.

D'autres caractéristiques non limitatives et avantageuses de l'accessoire conforme à l'invention sont les suivantes :
- ladite patte est reliée à ladite extrémité de l'accessoire par une liaison souple ;
- ladite liaison souple est une liaison formant charnière de pivotement de ladite patte ;
- ladite liaison souple forme un bossage apte à prendre appui contre une face interne dudit logement de ladite paroi pour bloquer par encliquetage ladite patte dans ledit logement ;
- l'accessoire comporte une lumière, s'étendant dans ladite patte ainsi que dans une partie dudit corps située à proximité de cette patte, au travers de laquelle ladite languette d'actionnement est accessible ;
- ladite languette d'actionnement comporte des moyens de préhension ;
- lesdits moyens de préhension comprennent au moins une ouverture d'introduction de la pointe d'un outil ;
- lesdits moyens de préhension comprennent au moins une nervure d'appui de la pointe d'un outil ;
- lesdits moyens de préhension comprennent un retour apte à être pris manuellement.
- ladite patte porte, sur chacun de ses côtés latéraux, un rebord d'appui d'un doigt pour la mise en place par encliquetage de ladite patte dans ledit logement de ladite paroi ;
- en position de repos, ladite patte s'étend en oblique par rapport audit corps et ladite languette d'actionnement s'étend sensiblement parallèlement audit corps en formant un angle aigu avec ladite patte ;
- ladite patte forme une seule pièce avec l'accessoire ;
- le corps s'étend globalement transversalement à l'axe longitudinal du socle de la goulotte ;
- le corps s'étendant entre deux parois longitudinales du socle de la goulotte, il comporte à l'autre des ses extrémités un bec apte à se prendre sous un retour d'une des deux parois longitudinales ; et
- le corps s'étendant entre deux parois longitudinales du socle de la goulotte, il comporte à son autre extrémité ladite patte munie de sa languette d'actionnement.

L'invention propose également un ensemble comprenant un socle de goulotte et un accessoire tel que précité apte à être rapporté localement sur une paroi longitudinale dudit socle, ladite paroi comprenant à cet effet un logement défini entre, d'une part, une nervure longitudinale prévue sur une face interne de ladite paroi, et, d'autre part, la surface inférieure en angle droit d'un retour en équerre de ladite paroi.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective de dessus d'un mode de réalisation de l'accessoire selon l'invention ;
- la figure 2 est une vue en bout d'un socle de goulotte dans lequel est monté l'accessoire de la figure 1, et constituant avec celui-ci un ensemble selon l'invention ;
- la figure 3 est une vue en bout d'un autre socle de goulotte dans lequel est montée une variante de réalisation de l'accessoire de la figure 1, et constituant avec celui-ci un ensemble conforme à l'invention ;
- la figure 4 est une vue en bout d'une cloison montée sur un socle de goulotte sur laquelle sont montés des moyens d'assujettissement d'un accessoire conforme à l'invention ;
- la figure 5 est une vue similaire à celle de la figure 4 avec une cloison de plus grande hauteur ;
- la figure 6 est une vue en perspective de trois quarts d'un autre mode de réalisation de l'accessoire selon l'invention ;
- les figures 7 à 10 représentent les différentes étapes de mise en place de l'accessoire représenté sur la figure 6 sur un socle de goulotte constituant avec celui-ci un ensemble selon l'invention ;
- la figure 11 est une vue en coupe selon le plan XI-XI de la figure 10.
- la figure 12 est une vue en perspective de trois quarts d'un autre mode de réalisation de l'accessoire selon l'invention ;
- la figure 13 est une vue en bout de deux socles de goulottes juxtaposés à la jonction desquels est monté l'accessoire de la figure 12 ; et
- la figure 14 est une vue en perspective de dessus de deux socles de goulottes juxtaposés à la jonction desquels est monté l'accessoire de la figure 12.

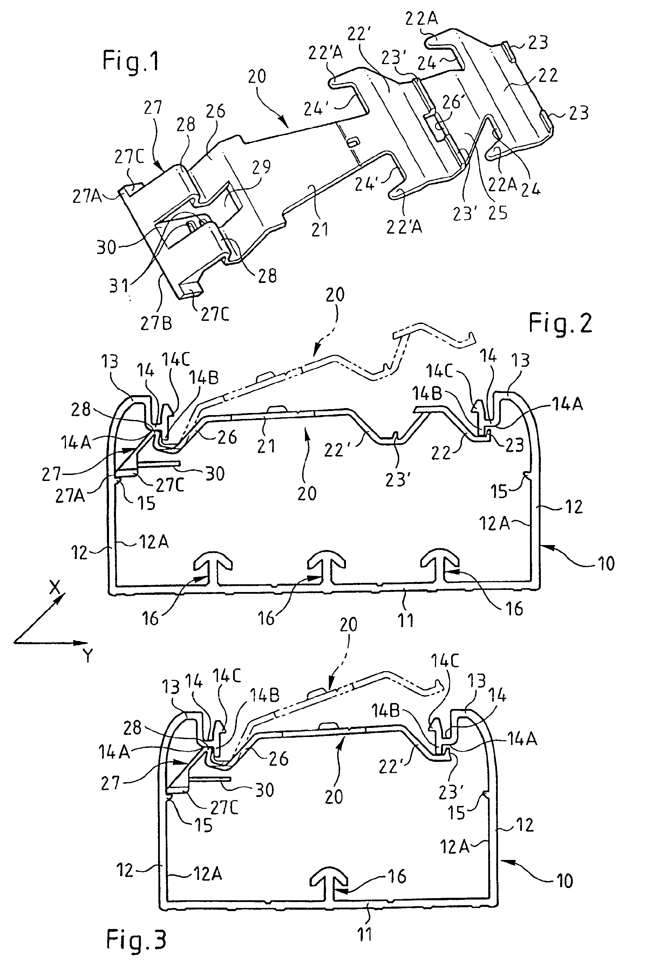

Sur la figure 1 on a représenté un accessoire 20 pour goulotte, ici une agrafe de retenue, qui comprend un corps 21 pourvu, à ses deux extrémités 26, 22, de moyens d'assujettissement différents par lesquels il est apte à être rapporté localement entre deux parois longitudinales 12 d'un socle d'une goulotte 10 (voir figures 2, 3, 4 et 5) telles que par exemple des cloisons internes 40 et/ou des ailes latérales 12.

De manière connue en soi, comme le montrent les figures 2 et 3, le socle d'une telle goulotte 10 comporte un fond 11 et deux ailes latérales 12 portant chacune à une extrémité libre 13 un retour en équerre 14 formant une gorge pour la mise en place de moyens de montage d'un couvercle de fermeture (non représenté). A cet effet, à l'extérieur du retour en équerre 14 porté par chaque aile latérale 12, il est prévu un crochet 14C pour l'accrochage d'une dent d'encliquetage d'un couvercle de fermeture (non représenté).

De manière également connue en soi, le corps 21 de l'agrafe de retenue 20 présente globalement une forme trapézoïdale avec une première extrémité de montage 22 présentant également une forme de trapèze de plus grande largeur, cette extrémité de montage 22 comportant sur un bord d'extrémité des becs 23 pour l'accrochage de ladite extrémité 22 sous un retour en équerre 14 d'une aile latérale 12 du socle de la goulotte 10 (voir figure 2) ou sous un retour en équerre d'une cloison interne portée par ledit socle.

Cette extrémité de montage 22 comporte, à l'opposé de ses becs 23, deux crochets latéraux 24 définis entre les bords en oblique d'une partie d'extrémité 25 du corps 21 de l'agrafe de retenue 20 et des jambages 22A portés par ladite extrémité de montage 22.

Ces crochets latéraux 24 permettent avantageusement d'atteler à ladite agrafe de retenue 20, de manière amovible, au moins un câble électrique (non représenté) en l'absence du couvercle de fermeture de la goulotte 10.

Cette configuration particulière précitée de l'agrafe de retenue 20 ne sera pas ici décrite dans le détail, car elle fait déjà l'objet d'une demande de brevet français FR 97 11059 appartenant à la Demanderesse, à laquelle on se rapportera pour obtenir des détails de réalisation.

En outre, selon le mode de réalisation représenté sur la figure 1, l'agrafe de retenue 20 comporte, entre le corps 21 et la partie d'extrémité 25 en forme de trapèze, une deuxième extrémité de montage 22' identique à l'extrémité de montage 22, avec deux becs 23' pour son accrochage sous un retour en équerre d'une aile latérale 12 ou d'une cloison interne d'un socle de goulotte 10 (voir figure 3) et deux crochets latéraux 24' définis entre des jambages 22'A portés par ladite extrémité de montage 22' et les bords en oblique du corps 21.

A la jonction entre ladite deuxième extrémité de montage 22' et la partie d'extrémité 25 du corps 21, il est prévu une ligne de cassure 26' pour éliminer éventuellement la première extrémité de montage 22 en réduisant ainsi la longueur de l'agrafe de retenue 20 afin de la rapporter sur un socle de goulotte de plus faible largeur (voir figure 3).

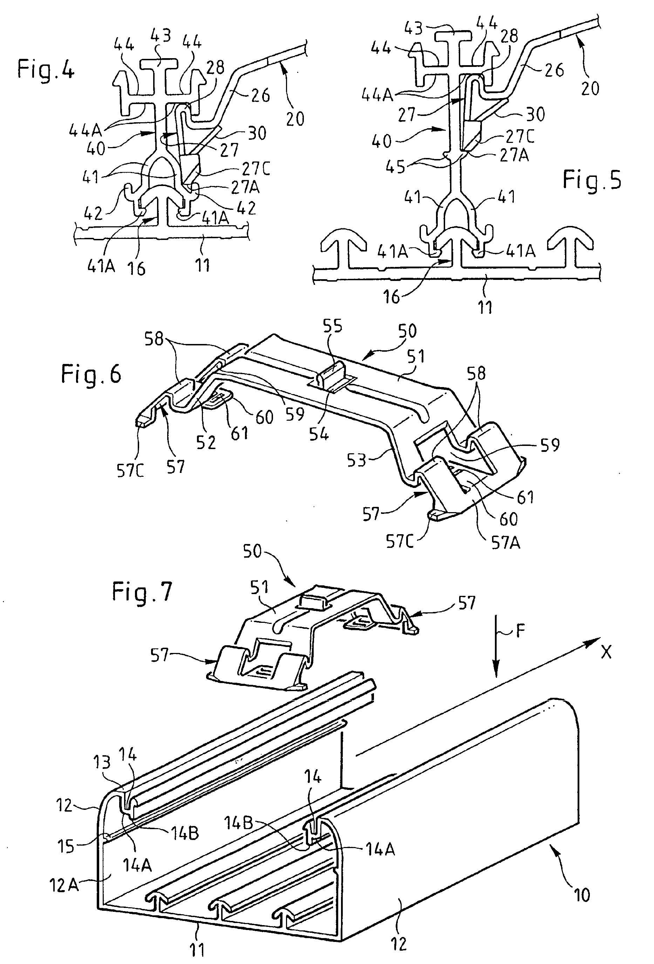

A son autre extrémité 26, le corps 21 de l'agrafe de retenue 20 représentée sur la figure 1 comporte des moyens d'assujettissement, qui font l'objet de la présente invention, par lesquels elle est apte à être rapportée localement sur une paroi longitudinale du socle de la goulotte 10, telle qu'une aile latérale 12 de ce socle (voir figures 2 et 3) ou une cloison interne 40 montée sur des nervures longitudinales 16 portées par le fond 11 de ce socle (voir figures 4 et 5).

Avantageusement, ces moyens d'assujettissement comprennent une patte 27 apte à s'encliqueter dans un logement de l'aile latérale 12 ou de la cloison interne 40. Cette patte 27 s'étend globalement en oblique par rapport à la direction générale du corps 21 de l'agrafe de retenue 20. Cette patte 27 comprend une languette d'actionnement 30 qui s'étend à partir de l'extrémité libre 27A de ladite patte 27 en formant un angle aigu avec elle.

Ladite languette d'actionnement 30 s'étend sous la face arrière du corps 21 de l'agrafe de retenue 20, c'est-à-dire la face du corps 21 destinée à être tournée vers l'intérieur du socle de la goulotte 10.

En outre, lorsque l'agrafe de retenue 20 est en position de repos, c'est-à-dire lorsqu'elle n'est pas montée dans le socle d'une goulotte, comme cela est représenté sur la figure 1, cette languette d'actionnement 30 s'étend sensiblement parallèlement à la direction générale du corps 21 de ladite agrafe de retenue 20.

Comme cela est représenté plus particulièrement sur la figure 1, la patte 27 comporte dans une partie centrale une lumière 29 qui s'étend également sur une partie du corps 21 de l'agrafe de retenue 20 située à proximité de ladite patte, c'est-à-dire sur la partie d'extrémité 26 du corps 21 de l'agrafe de retenue 20 à laquelle est reliée ladite patte 27. Cette lumière 29 autorise l'accès à ladite languette d'actionnement 30, lorsque l'agrafe de retenue 20 est montée dans le socle de la goulotte, et plus particulièrement lorsque ladite patte est encliquetée dans le logement correspondant de la paroi longitudinale correspondante du socle de la goulotte.

Cette languette d'actionnement 30 accessible depuis l'extérieur du socle de la goulotte 10, lorsque l'agrafe de retenue 20 est montée dans ledit socle, est alors apte à être tirée selon sa direction longitudinale d'orientation (ici parallèle au fond 11 du socle de la goulotte 10) pour dégager du logement l'extrémité libre 27A de la patte 27 encliquetée dans ledit logement.

Avantageusement, la patte 27 est reliée à l'extrémité 26 du corps 21 de l'agrafe de retenue 20 par une liaison souple 28 qui est une liaison formant charnière de pivotement de ladite patte 27.

Ainsi, comme cela sera décrit plus en détail ultérieurement, lorsqu'on exerce un effort de traction sur la languette d'actionnement 30 selon sa direction longitudinale d'orientation, on fait pivoter la patte 27 autour de l'axe de la charnière de pivotement 28, en entraînant ainsi un déplacement en arc de cercle de l'extrémité libre 27A de ladite patte 27.

Ici, avantageusement, la liaison souple 28, entre la patte 27 et l'extrémité 26 du corps 21 de l'agrafe de retenue 20, forme un bossage apte à prendre appui contre une face interne 14A, 44A du logement de la paroi longitudinale 12, 40 pour bloquer par encliquetage ladite patte 27 dans ledit logement.

Les deux socles de la goulotte 10 représentés sur les figures 2 et 3 sont particulièrement adaptés au montage de l'agrafe de retenue 20 conforme à l'invention et représentée sur la figure 1. Chaque socle d'une telle goulotte 10 forme alors avec l'agrafe de retenue 20 un ensemble conforme à l'invention.

En particulier, chaque aile latérale 12 des socles de goulotte 10 représentés sur les figures 2 et 3 comprend un logement pour le montage de la patte 27 portée par l'extrémité 26 du corps 21 de l'agrafe de retenue 20, qui est défini entre, d'une part, une nervure longitudinale 15 prévue sur la face interne 12A de chacune des ailes latérales 12, et, d'autre part, la surface inférieure 14A en angle droit du retour en équerre 14 de chacune desdites ailes latérales 12.

La surface inférieure 14A en angle droit est formée par le dessous de la gorge destinée à accueillir une extrémité d'un couvercle de fermeture (non représenté) et par la surface intérieure d'un talon 14B porté par ledit retour et prolongeant le crochet 14C.

La distance prévue entre chaque nervure longitudinale 15 et chaque surface inférieure 14A en angle droit est adaptée à la longueur de la patte 27 portée par l'agrafe de retenue 20.

Ainsi, lorsque la patte 27 est mise en place dans ledit logement défini entre la nervure longitudinale 15 et la surface inférieure 14A en angle droit correspondante de l'aile latérale 12 sur laquelle l'agrafe de retenue 20 est rapportée, le bossage formé par la charnière de pivotement 28 de la patte 27 vient se bloquer en appui contre cette surface inférieure 14A en angle droit, et l'extrémité libre 27A de ladite patte 27 vient reposer sur la nervure longitudinale 15, avec son bord d'extrémité 27B en appui contre la face interne 12A de ladite aile latérale 12.

Dans une position représentée en traits mixtes sur la figure 2, l'agrafe de retenue 20 est rapportée ainsi sur l'aile latérale 12 du socle de la goulotte et est en position d'attente, orientée en oblique par rapport à l'axe longitudinal X du socle de la goulotte 10.

Pour prendre sa position finale dans le socle de la goulotte 10, l'agrafe de retenue 20 est basculée depuis sa position d'attente en oblique représentée en traits mixtes vers sa position finale représentée en traits pleins sur la figure 2, autour de l'axe de la charnière de pivotement 28, pour que les becs 23 portés par l'extrémité de montage 22 viennent se prendre sous le retour en équerre 14 et plus particulièrement derrière le talon 14B porté par ledit retour en équerre de l'autre aile latérale 12 du socle de la goulotte 10.

Lorsque l'agrafe de retenue 20 est en position finale dans le socle de la goulotte 10, la languette d'actionnement 30 de la patte 27 s'étend en dessous du corps 21 de ladite agrafe (c'est-à-dire entre le corps 21 et le fond 11 du socle) de sorte qu'elle ne prend aucune place du côté avant dudit socle.

Sur la figure 2 on a représenté un socle de goulotte de grande largeur et ce sont les becs 23 de l'extrémité de montage 22 de l'agrafe de retenue 20 qui viennent se prendre derrière le talon 14B de l'aile latérale 12 correspondante du socle de la goulotte.

Par contre, sur la figure 3, on a représenté un socle de plus faible largeur, et l'agrafe de retenue 20 est alors diminuée en longueur en cassant l'extrémité de montage 22 pour être adaptée à cette plus faible largeur. Ainsi c'est l'extrémité de montage 22' de l'agrafe de retenue qui intervient sur l'aile latérale 12 correspondante de la goulotte, et ses becs 23' qui viennent se prendre derrière le talon 14B du retour en équerre 14 correspondant de l'aile latérale 12 dudit socle de la goulotte 10.

Dans la position de montage représentée sur la figure 2 ou 3, l'agrafe de retenue 20 s'étend d'une aile latérale 12 à l'autre du socle de la goulotte selon la direction transversale Y à l'axe longitudinal X du socle de la goulotte, et la languette d'actionnement 30 de la patte 27 de ladite agrafe de retenue 20 s'étend parallèlement au corps 21 de ladite agrafe de retenue 20.

En revenant sur la languette d'actionnement 30 reliée à l'extrémité libre 27A de la patte 27, celle-ci comprend avantageusement des moyens de préhension pour être tirée aisément au travers de la lumière 29 afin de dégager du logement l'extrémité libre 27A de la patte 27, c'est-à-dire dégager de la nervure longitudinale 15 cette extrémité libre 27A en appui contre celle-ci, afin de sortir l'agrafe de retenue 20 du socle de la goulotte 10.

Selon l'exemple représenté sur la figure 1, ces moyens de préhension comprennent deux ouvertures 31 d'introduction de la pointe d'un outil.

Toutefois, selon d'autres modes de réalisation non représentés, on peut prévoir que les moyens de préhension prévus sur ladite languette d'actionnement 30 comprennent au moins une nervure d'appui de la pointe d'un outil ou encore un retour apte à être pris manuellement au travers de la lumière 29.

Ainsi, pour sortir la patte 27 de son logement prévu sur l'aile latérale 12, il suffit d'introduire la pointe d'un outil dans une des ouvertures 31 de la languette d'actionnement accessible à travers la lumière 29, et de prendre appui sur le crochet 14C du retour en équerre 14 porté par ladite aile latérale 12, pour faire basculer l'outil et exercer par là même un effort de traction sur la languette d'actionnement 30 selon la direction longitudinale d'orientation de ladite languette s'étendant selon l'axe Y, vers l'intérieur du socle de la goulotte. L'extrémité libre 27A de la patte 27 liée à ladite languette d'actionnement 30 suit alors le mouvement de cette dernière en étant dégagée de la nervure longitudinale 15. Ce mouvement de translation de l'extrémité libre 27A est rendu possible car, sous l'action de la languette d'actionnement 30, ladite patte 27 pivote autour de l'axe de la charnière de pivotement 28 en se repliant vers l'extrémité 26 du corps 21 de l'agrafe de retenue 20.

En outre, préférentiellement, la patte 27 de l'agrafe de retenue 20 porte, sur chacun de ses côtés latéraux, un rebord 27C d'appui d'un doigt. Ces rebords latéraux 27C permettent d'aider à la mise en place par encliquetage de ladite patte 27 dans le logement défini entre la nervure longitudinale 15 et la surface inférieure 14A en angle droit de l'aile latérale 12 du socle de la goulotte 10.

Plus particulièrement, pour mettre en place la patte 27 de l'agrafe de retenue 20 dans le logement de l'aile latérale 12, on positionne le bossage formé par la charnière de pivotement 28 de ladite patte sous le retour en équerre 14 et l'extrémité libre 27A de ladite patte sous ladite nervure longitudinale 15. Puis, on prend appui avec les doigts sous les rebords latéraux 27C de ladite patte 27, pour la faire basculer et faire passer ainsi son extrémité libre 27A au-dessus de ladite nervure longitudinale 15 afin qu'elle repose sur cette dernière. Dans cette position, le bossage formé par la charnière de pivotement 28 est placé en appui contre ladite surface inférieure 14A en angle droit.

Sur les figures 4 et 5, on a représenté le montage de la patte 27 portée par l'extrémité 26 de l'agrafe de retenue 20 ou d'un quelconque accessoire équivalent sur deux cloisons internes 40 du même type, mais de différentes hauteurs, montées chacune sur une nervure longitudinale 16 portée par le fond 11 du socle de la goulotte 10.

Chacune des cloisons internes 40 comprend à son extrémité supérieure 43 en forme de T des retours en équerre 44 pour le montage de couvercles de fermeture (non représentés). Chacune de ces cloisons comprend également à son extrémité inférieure des branches 41 pourvues de dents d'encliquetage 41A pour son montage par encliquetage sur la nervure longitudinale 16.

La cloison interne 40 représentée sur la figure 4 comporte, sur chacune de ses faces, un logement destiné à accueillir la patte 27 portée par l'extrémité 26 du corps 21 de l'agrafe de retenue 20. Ce logement est défini entre, d'une part, une surface inférieure 44A en angle droit d'un retour en équerre 44 de la cloison interne 40, et d'autre part, un crochet 42 prévu à l'extrémité d'une branche 41 de montage sur ladite nervure longitudinale 16, et orienté à l'opposé de la dent d'encliquetage 41A portée par ladite branche 41.

Ainsi, comme le montre la figure 4, lorsque la patte 27 est encliquetée dans le logement défini précédemment, elle est orientée sensiblement perpendiculairement au corps 21 de l'agrafe de retenue 20 de telle sorte que sa languette d'actionnement 30 est dirigée en direction de ladite extrémité 26 dudit corps 21 de l'agrafe de retenue 20.

Pour désencliqueter la patte 27 du logement formé sur ladite cloison interne 40, il suffit encore de tirer sur la languette d'actionnement 30 selon sa direction longitudinale d'orientation, pour faire pivoter la patte 27 autour de l'axe de la charnière de pivotement 28 et dégager ainsi l'extrémité libre 27A de ladite patte 27 de son appui contre le crochet 42.

Sur la figure 5, le logement de la cloison interne 40, destiné à accueillir la patte 27 de l'agrafe de retenue 20, est similaire à celui prévu sur chaque aile latérale 12 du socle de la goulotte 10 représenté sur la figure 2, puisqu'il est défini entre une nervure longitudinale 45 portée par une face de la cloison interne 40 et la surface inférieure 44A en angle droit du retour en équerre 44 situé sur cette face.

L'orientation de la languette d'actionnement 30 représentée sur la figure 5 est identique à celle représentée sur la figure 4.

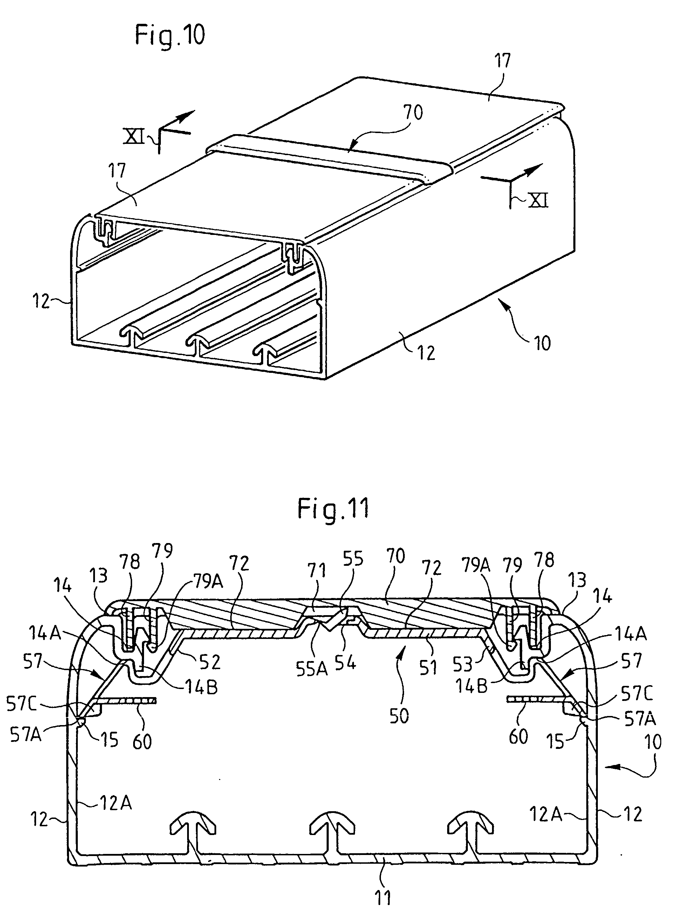

Sur la figure 6 on a représenté un autre accessoire 50 conforme à l'invention qui est un support ou joint d'un dispositif de jonction de tronçons de couvercle 17 mis bout à bout (voir figure 10).

Cet accessoire 50 comporte un corps 51 comprenant dans sa partie médiane une fenêtre 54 au travers de laquelle émerge un doigt 55 permettant de former une butée pour les bords d'extrémité des tronçons de couvercle 17 à raccorder. Ce doigt 55 est avantageusement monté pivotant dans la fenêtre 54 de façon à pouvoir s'escamoter lorsque l'on rapporte un contre-joint 70 sur l'accessoire 50, comme cela est plus particulièrement représenté sur les figures 10 et 11. Ce doigt 55 escamotable ne faisant pas partie à proprement parler de la présente invention, ne sera pas ici décrit plus en détail.

Comme le montre plus particulièrement la figure 6, à chacune des extrémités du corps 51, il est prévu des moyens d'assujettissement pour le montage du joint 50 sur le socle de la goulotte 10 représenté sur la figure 7. Ces moyens d'assujettissement sont similaires aux moyens d'assujettissement portés par l'extrémité 26 du corps 21 de l'agrafe de retenue 20 représentée sur la figure 1.

Plus particulièrement, à chaque extrémité 52, 53 du corps 51 de l'accessoire 50, il est prévu une patte 57 apte à s'encliqueter dans un logement d'une paroi longitudinale du socle de la goulotte, ici une aile latérale 12 du socle de la goulotte 10 représenté sur la figure 7.

Chaque patte 57 est reliée à l'extrémité 52, 53 correspondante du corps 51 de l'accessoire 50 par une liaison souple 58 formant une charnière de pivotement et un bossage destiné à venir en appui sur une surface interne du logement, c'est-à-dire sur la surface inférieure 14A en angle droit du retour en équerre 14 de l'aile latérale 12 correspondante du socle de la goulotte 10.

Ici, le socle de la goulotte 10 est identique ou similaire aux socles représentés sur les figures 2 et 3, et on se reportera aux passages pertinents de la description de ces figures 2 et 3 pour les détails de réalisation des logements, prévus sur les ailes latérales 12 du socle de la goulotte, destinés à accueillir les pattes 57 de l'accessoire 50.

En outre, chaque patte 57 comporte, sur ses côtés latéraux, des rebords 57C permettant l'appui d'un doigt pour l'encliquetage de ladite patte 57 dans le logement correspondant de l'aile latérale 12 du socle de la goulotte 10.

Ici également, chaque patte 57 comporte une lumière 59 qui s'étend également dans chacune des extrémités 52, 53 du corps 51 de la goulotte de façon à avoir accès à la languette d'actionnement 60 reliée à chacune des extrémités libres 57A de chacune des pattes 57 et s'étendant sous la face arrière du corps 51 dudit joint 50 lorsque ce joint 50 est monté entre les ailes latérales 12 du socle de la goulotte 10.

Cette languette d'actionnement 60 permet également de dégager du logement l'extrémité libre 57A de la patte 57 lorsque celle-ci est engagée dans le logement correspondant. Elle est apte à cet effet à être tirée globalement selon sa direction longitudinale d'orientation pour sortir l'extrémité libre 57A de son appui contre la nervure longitudinale 15.

Chaque languette d'actionnement 60 s'étend, dans la position de repos de l'accessoire, globalement parallèlement à la face arrière du corps 51 dudit accessoire (c'est-à-dire la face destinée à être tournée vers le fond du socle) en formant un angle aigu avec la patte 57 correspondante, cette dernière s'étendant en oblique par rapport au corps 51. Chaque languette d'actionnement 60 est pourvue de moyens de préhension du même type que ceux décrits pour la languette d'actionnement 30. Ici, ces moyens de préhension comprennent deux ouvertures 61 d'introduction de la pointe d'un outil.

Bien entendu, on peut prévoir également, comme autres moyens de préhension, des nervures d'appui de la pointe d'un outil ou un retour apte à être pris manuellement.

La mise en place du dispositif de jonction et en particulier du joint 50 entre les ailes latérales 12 du socle de la goulotte 10 va être décrite maintenant en référence aux figures 7 à 10.

Le joint 50 est descendu, selon la flèche F, à l'intérieur du socle de la goulotte 10 en étant orienté selon l'axe longitudinal X de cette goulotte 10, comme cela est représenté sur la figure 7.

Puis le joint 50 est pivoté pour se positionner transversalement à l'axe longitudinal X. En appuyant sur les rebords 57C, l'installateur engage alors chacune des pattes 57 du joint 50 dans le logement correspondant de l'aile latérale 12 du socle de la goulotte 10.

On notera que chaque patte 57 avec sa languette d'actionnement 60 associée au joint 50 est montée et démontée sur chaque aile latérale 12 de manière identique à la patte 27 de l'agrafe de retenue 20.

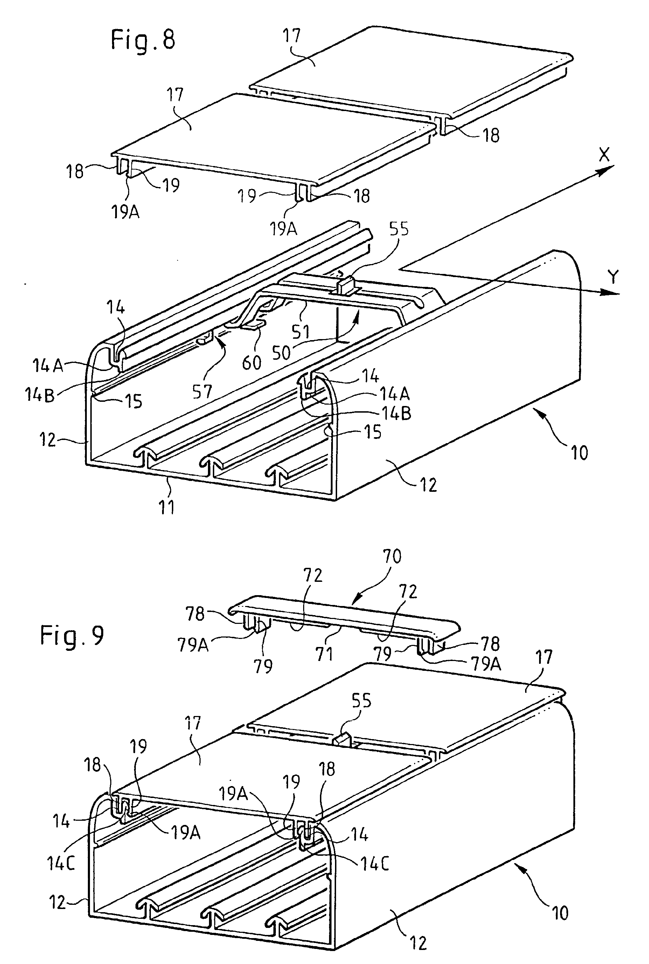

Comme cela est représenté sur la figure 8, une fois que le joint 50 est monté entre les deux ailes latérales 12 du socle de la goulotte 10, les languettes d'actionnement 60 sont accessibles depuis l'extérieur du socle de la goulotte 10 via les lumières 59 prévues à chacune des extrémités du corps 51.

Puis les tronçons de couvercle 17 sont rapportés sur le socle de la goulotte 10 de sorte qu'un bord d'extrémité coupé de chacun des tronçons vient en butée contre le doigt 55 qui émerge au niveau des surfaces supérieures des tronçons de couvercle (voir figure 9).

De manière classique, chaque tronçon de couvercle 17 est encliqueté dans un retour en équerre 14 d'une aile latérale 12 du socle de la goulotte 10. Pour cela, chaque tronçon 17 comporte, à proximité de chaque bord d'extrémité longitudinal, une première languette 18 qui est apte à s'engager dans la gorge formée par le retour en équerre 14 correspondant, et une deuxième languette 19 comportant à son extrémité libre une dent d'encliquetage 19A destinée à venir s'accrocher sur le crochet correspondant porté par le retour en équerre 14.

Puis, comme cela est plus particulièrement représenté sur les figures 9, 10 et 11, on vient rapporter un contre-joint 70 qui comporte, sur sa face inférieure, un logement central 71 destiné à accueillir le doigt 55 et, de part et d'autre du logement central 71, des nervures 72 destinées à venir en appui contre le corps 51 du joint 50. Lors de la mise en place de ce contre-joint 70 par encliquetage dans les retours en équerre 14 des ailes latérales 12 du socle de la goulotte 10, le fond du logement central 71 de ce contre-joint 70 appuie sur le doigt 55 pour l'escamoter légèrement dans la fenêtre 54. Cet escamotage est réalisé par pivotement du doigt 55 autour de la charnière 55A qui le lie au corps 51 du joint 50.

Le montage du contre-joint 70 sur les retours en équerre 14 des ailes latérales 12 du socle de la goulotte est réalisé par l'intermédiaire de pattes longitudinales 78 et de pattes longitudinales 79 pourvues à leur extrémité de dents d'encliquetage 79A (voir figure 11).

Dans la position montée, le contre-joint 70 appuie par ses nervures 72 contre le corps 51 du joint 50, et une partie d'extrémité de chaque tronçon de couvercle 17 est prise en sandwich entre la face inférieure du contre-joint 70 et la face supérieure du corps 51 du joint 50.

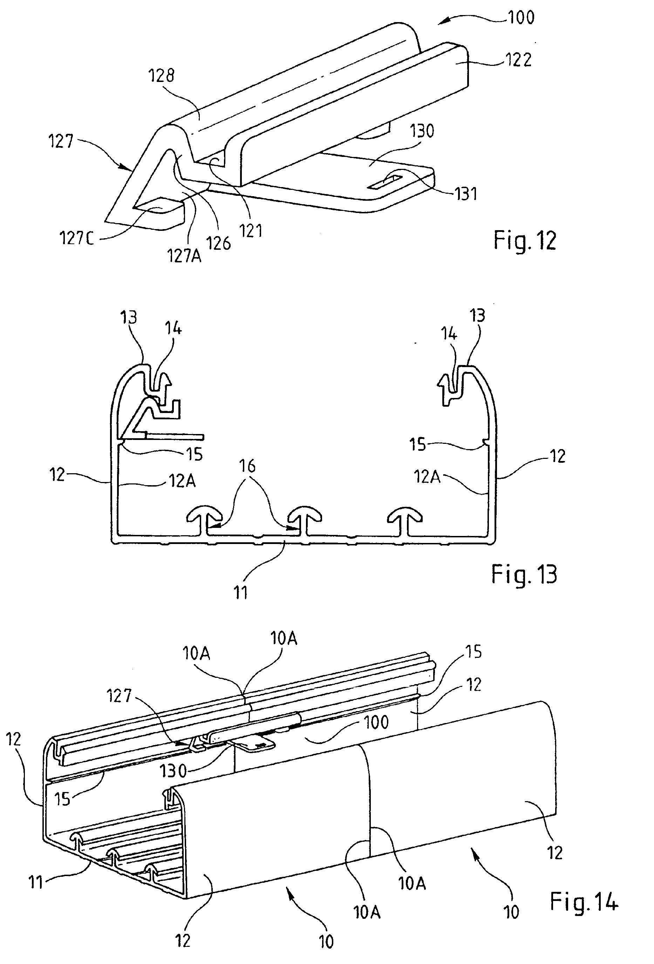

Sur la figure 12 on a représenté un autre accessoire 100 conforme à l'invention qui est une éclisse servant de jonction de socles de goulottes 10 juxtaposés (voir figure 14).

Cet accessoire 100 comporte un corps 121 dont une extrémité 126 comporte des moyens d'assujettissement pour le montage de l'éclisse 100 sur les socles de goulottes 10 juxtaposés, à la jonction des bords d'extrémité 10A desdits socles de goulottes (voir figure 14). Ces moyens d'assujettissement sont similaires aux moyens d'assujettissement portés par l'extrémité 26 du corps 21 de l'agrafe de retenue 20 représentée sur la figure 1.

Plus particulièrement, ces moyens d'assujettissement comprennent une patte 127 apte à s'encliqueter dans un logement formé par la mise bout à bout des deux logements prévus dans les deux ailes latérales juxtaposées des socles de goulottes 10 (voir figures 13 et 14). Cette patte 127 est reliée à l'extrémité 126 du corps 121 de l'accessoire 100 par une liaison souple 128 formant une charnière de pivotement et un bossage destiné à venir en appui sur une face interne du logement, c'est-à-dire sur la surface inférieure en angle droit des retours en équerre 14 juxtaposés des ailes latérales 12 correspondantes des socles de goulottes 10 juxtaposés.

Ici, les socles de goulottes 10 sont identiques ou similaires aux socles représentés sur les figures 2, 3 et 7, et on se reportera aux passages pertinents de la description des figures 2 et 3 pour les détails de réalisation des logements, prévus sur les ailes latérales 12 de chacun des socles de goulottes, destinés à accueillir la patte 127 de l'accessoire 100.

En outre, la patte 127 comporte, sur ses côtés latéraux, des rebords 127C permettant l'appui d'un doigt pour l'encliquetage de ladite patte 127 dans le logement correspondant des ailes latérales 12 juxtaposées des socles de goulottes 10. Ici, la patte 127 comporte également une languette d'actionnement 130 reliée à l'extrémité libre 127A de ladite patte 127 et s'étendant parallèlement à la face arrière du corps 121 de l'éclisse 100. La longueur de cette languette d'actionnement 130 est supérieure à la longueur du corps 121 de l'éclisse 100 de façon à s'étendre au-delà de ce corps et à ce que l'extrémité libre de la languette d'actionnement 130 soit accessible depuis l'extérieur des socles de goulottes 10 juxtaposés, lorsque ladite éclisse est montée dans lesdits socles à la jonction de ceux-ci.

Cette languette d'actionnement 130 permet également de dégager du logement l'extrémité libre 127A de la patte 127 lorsque celle-ci est engagée dans le logement correspondant. Elle est apte à cet effet à être tirée globalement selon sa direction longitudinale d'orientation pour sortir l'extrémité libre 127A de ladite patte 127 de son appui contre la nervure longitudinale 15 constituée par la mise bout à bout des deux nervures longitudinales 15 des ailes latérales 12 juxtaposées.

Cette languette d'actionnement 130 est pourvue de moyens de préhension du même type que ceux décrits pour la languette d'actionnement 30. Ici, ces moyens de préhension comprennent une ouverture 131 d'introduction de la pointe d'un outil.

Bien entendu, on peut prévoir également, comme autres moyens de préhension, une ou plusieurs nervures d'appui de la pointe d'un outil ou un retour apte à être pris manuellement.

La mise en place de la patte 127 dans le logement des ailes latérales 12 juxtaposées des socles de goulottes 10 est identique à la mise en place de la patte 27 de l'agrafe de retenue 20 dans le logement correspondant de la paroi longitudinale du socle de la goulotte, et on se reportera aux passages correspondants de la description pour plus de détail sur cette mise en place.

Pour sortir l'éclisse 100 de son logement, il suffit d'introduire la pointe d'un outil dans l'ouverture 131 prévue à l'extrémité libre de la languette d'actionnement 130 et de prendre appui sur le retour 122 prévu à l'extrémité libre du corps 121 de l'éclisse 100, pour faire basculer l'outil et tirer ainsi la languette d'actionnement 130 selon sa direction longitudinale afin de dégager l'extrémité libre 127A de la patte 127 de son appui contre la nervure longitudinale 15 correspondante.

Lorsque l'éclisse 100 est montée à la jonction des socles de goulottes 10 juxtaposés, la patte 127 s'étend à cheval sur les deux ailes latérales 12 juxtaposées et les lie mécaniquement entre elles.

Bien entendu, l'agrafe de retenue 20, le joint 50 et l'éclisse 100 sont chacun réalisés d'une seule pièce, avantageusement en matière plastique moulée, chaque patte 27, 57, 127 venant de formation avec son accessoire 20, 50, 100.

## Revendications

1. Accessoire (20 ; 50) pour goulotte (10), comprenant un corps (21 ; 51) pourvu, à l'une au moins de ses extrémités (26 ; 52), de moyens d'assujettissement par lesquels il est apte à être rapporté localement sur une paroi longitudinale (12 ; 40) du socle d'une telle goulotte (10), telle que par exemple une cloison interne (40) ou une aile latérale (12) de ce socle,
les moyens d'assujettissement comprenant une patte (27 ; 57) apte à s'encliqueter dans un logement de ladite paroi (12 ; 40), et comprenant une languette d'actionnement (30 ; 60) reliée à une extrémité libre (27A ; 57A) de ladite patte (27 ; 57), **caractérisé en ce que** ladite languette d'actionnement (30 ; 60) est accessible depuis l'extérieur du socle de la goulotte (10) et apte à être tirée selon sa direction longitudinale d'orientation pour dégager du logement ladite extrémité libre (27A ; 57A) de ladite patte (27 ; 57).

2. Accessoire (20 ; 50) selon la revendication 1, **caractérisé en ce que** ladite patte (27 ; 57) est reliée à ladite extrémité (26 ; 52) de l'accessoire par une liaison souple (28 ; 58).

3. Accessoire (20 ; 50) selon la revendication 2, **caractérisé en ce que** ladite liaison souple (28 ; 58) est une liaison formant charnière de pivotement de ladite patte (27 ; 57).

4. Accessoire (20 ; 50) selon l'une des revendications 2 ou 3, **caractérisé en ce que** ladite liaison souple (28 ; 58) forme un bossage apte à prendre appui contre une face interne (14A ; 44A) dudit logement de ladite paroi (12 ; 40) pour bloquer par encliquetage ladite patte (27 ; 57) dans ledit logement.

5. Accessoire (20 ; 50) selon l'une des revendications 1 à 4, **caractérisé en ce qu'**il comporte une lumière (29 ; 59), s'étendant dans ladite patte (27 ; 57) ainsi que dans une partie (26 ; 52) dudit corps (21 ; 51) située à proximité de cette patte (27 ; 57), au travers de laquelle ladite languette d'actionnement (30 ; 60) est accessible.

6. Accessoire (20 ; 50) selon l'une des revendications 1 à 5, **caractérisé en ce que** ladite languette d'actionnement (30 ; 60) comporte des moyens de préhension.

7. Accessoire (20 ; 50) selon la revendication 6, **caractérisé en ce que** lesdits moyens de préhension comprennent au moins une ouverture (31 ; 61) d'introduction de la pointe d'un outil.

8. Accessoire (20 ; 50) selon la revendication 6, **caractérisé en ce que** lesdits moyens de préhension comprennent au moins une nervure d'appui de la pointe d'un outil.

9. Accessoire (20 ; 50) selon la revendication 6, **caractérisé en ce que** lesdits moyens de préhension comprennent un retour apte à être pris manuellement.

10. Accessoire (20 ; 50) selon l'une des revendications 1 à 9, **caractérisé en ce que** ladite patte (27 ; 57) porte sur chacun de ses côtés latéraux un rebord (27C ; 57C) d'appui d'un doigt pour la mise en place par encliquetage de ladite patte (27 ; 57) dans ledit logement de ladite paroi (12 ; 40).

11. Accessoire (20 ; 50) selon l'une des revendications 1 à 10, **caractérisé en ce qu'**en position de repos, ladite patte (27 ; 57) s'étend en oblique par rapport audit corps (21 ; 51) et ladite languette d'actionnement (30 ; 60) s'étend sensiblement parallèlement audit corps (21 ; 51) en formant un angle aigu avec ladite patte (27 ; 57).

12. Accessoire (20 ; 50) selon l'une des revendications 1 à 11, **caractérisé en ce que** ladite patte (27 ; 57) forme une seule pièce avec l'accessoire.

13. Accessoire (20 ; 50) selon l'une des revendications 1 à 12, **caractérisé en ce que** le corps (21 ; 51) s'étend globalement transversalement à l'axe longitudinal (X) du socle de la goulotte (10).

14. Accessoire (20) selon la revendication 13, **caractérisé en ce que** le corps (21) s'étendant entre deux parois longitudinales (12) du socle de la goulotte (10), il comporte à son autre extrémité un bec (23, 23') apte se prendre sous un retour d'une des deux parois longitudinales (12).

15. Accessoire (50) selon la revendication 13, **caractérisé en ce que** le corps (51) s'étendant entre deux parois longitudinales (12) du socle de la goulotte (10), il comporte à son autre extrémité ladite patte (57) munie de sa languette d'actionnement (60).

16. Ensemble comprenant un socle de goulotte (10) et un accessoire (20 ; 50) selon l'une des revendications 1 à 15 apte à être rapporté localement sur une paroi longitudinale (12 ; 40) dudit socle, ladite paroi comprenant à cet effet un logement défini entre, d'une part, une nervure longitudinale (15 ; 45 ; 42) prévue sur une face interne (12A) de ladite paroi (12 ; 40), et, d'autre part, la surface inférieure (14A ; 44A) en angle droit d'un retour en équerre (14 ; 44) de ladite paroi (12 ; 40).

## Claims

1. Accessory (20; 50) for trunking (10), including a body (21; 51) provided, at one of its ends at least (26; 52), with attachment means for attaching it locally to a longitudinal wall (12; 40) of the base section of the trunking (10), for example an internal partition (40) or a lateral flange (12) of said base section, the attachment means including a lug (27; 57) adapted to snap engage in a housing in said wall (12; 40) and including an actuator tongue (30; 60) connected to a free end (27A; 57A) of said lug (27; 57), **characterised in that** said actuator tongue (30; 60) is accessible from outside the base section of the trunking (10) and adapted to be pulled in the longitudinal direction of orientation to withdraw from the housing said free end (27A; 57A) of said lug (27; 57).

2. Accessory (20; 50) according to claim 1, **characterised in that** said lug (27; 57) is connected to said end (26; 52) of the accessory by a flexible connection (28; 58).

3. Accessory (20; 50) according to claim 2, **characterised in that** said flexible connection (28; 58) is a connection forming a pivot hinge of said lug (27; 57).

4. Accessory (20; 50) according to either claim 2 or claim 3, **characterised in that** said flexible connection (28; 58) forms a boss adapted to bear against an inside face (14A; 44A) of said housing of said wall (12; 40) to lock said lug (27; 57) in said housing by snap engagement.

5. Accessory (20; 50) according to one of claims 1 to 4, **characterised in that** it includes an opening (29; 59), extending in said lug (27; 57) and in a portion (26; 52) of said body (21; 51) situated near said lug (27; 57), through which said actuator tongue (30; 60) is accessible.

6. Accessory (20; 50) according to one of claims 1 to 5, **characterised in that** said actuator tongue (30; 60) includes grasping means.

7. Accessory (20; 50) according to claim 6, **characterised in that** said grasping means include at least one opening (31; 61) for inserting the tip of a tool.

8. Accessory (20; 50) according to claim 6, **characterised in that** said grasping means include at least one rib which can be depressed with the tip of a tool.

9. Accessory (20; 50) according to claim 6, **characterised in that** said grasping means include a rim which can be gripped manually.

10. Accessory (20; 50) according to one of claims 1 to 9, **characterised in that** said lug (27; 57) has on each of its lateral sides a lip (27C; 57C) which can be depressed with a finger to snap engage said lug (27; 57) in said housing of said wall (12; 40).

11. Accessory (20; 50) according to one of claims 1 to 10, **characterised in that**, in a rest position, said lug (27; 57) is oblique to said body (21; 51) and said actuator tongue (30; 60) is substantially parallel to said body (21; 51) and at an acute angle to said lug (27; 57).

12. Accessory (20; 50) according to one of claims 1 to 11, **characterised in that** said lug (27; 57) is in one piece with the accessory.

13. Accessory (20; 50) according to one of claims 1 to 12, **characterised in that** the general orientation of the body (21; 51) is transverse to the longitudinal axis (X) of the base section of the trunking (10).

14. Accessory (20) according to claim 13, **characterised in that** the body (21) extends between two longitudinal walls (12) of the base section of the trunking (10) and has at its other end a tab (23, 23') adapted to engage under a rim of one of the two longitudinal walls (12).

15. Accessory (50) according to claim 13, **characterised in that** the body (51) extends between two longitudinal walls (12) of the base section of the trunking (10) and it has at its other end said lug (57) with its actuator tongue (60).

16. Assembly including a base section of trunking (10) and an accessory (20; 50) according to one of claims 1 to 15 adapted to be attached locally to a longitudinal wall (12; 40) of said base section, said wall including to this end a housing defined between a longitudinal rib (15; 45; 42) on an inside face (12A) of said wall (12; 40) and, the perpendicular inside surface (14A; 44A) of a perpendicular rim (14; 44) of said wall (12; 40).

## Patentansprüche

1. Zusatzteil (20; 50) für einen Kabelkanal (10), enthaltend einen Körper (21; 51), der an zumindest einem seiner Enden (26; 52) mit Befestigungsmitteln versehen ist, über welche er stellenweise an eine Längswand (12; 40) des Sockels eines solchen Kabelkanals (10), wie beispielsweise an eine innenliegende Trennwand (40) oder einen Seitenschenkel (12) dieses Sockels, angefügt werden kann, wobei die Befestigungsmittel eine Lasche (27; 57), die in einen Aufnahmeraum der Längswand (12; 40) einrasten kann, und eine Betätigungszunge (30; 60) aufweisen, die mit einem freien Ende (27A; 57A) der Lasche (27; 57) verbunden ist,
**dadurch gekennzeichnet, dass** die Betätigungszunge (30; 60) von außerhalb des Sockels des Kabelkanals (10) zugänglich ist und in Richtung ihrer longitudinalen Ausrichtung weggezogen werden kann, um das freie Ende (27A; 57A) der Lasche (27; 57) aus dem Aufnahmeraum freizugeben.

2. Zusatzteil (20; 50) nach Anspruch 1,
**dadurch gekennzeichnet, dass** die Lasche (27; 57) über eine nachgiebige Verbindung (28; 58) mit dem Ende (26; 52) des Zusatzteils verbunden ist.

3. Zusatzteil (20; 50) nach Anspruch 2,
**dadurch gekennzeichnet, dass** die nachgiebige Verbindung (28; 58), die mit der Lasche (27; 57) ein Schwenkscharnier bildet.

4. Zusatzteil (20; 50) nach einem der Ansprüche 2 oder 3,
**dadurch gekennzeichnet, dass** die nachgiebige Verbindung (28; 58) eine Erhebung bildet, die in Anlage an eine Innenfläche (14A; 44A) des Aufnahmeraums der Wand (12; 40) gelangen kann, um die Lasche (27; 57) im Aufnahmeraum einrastend zu sichern.

5. Zusatzteil (20; 50) nach einem der Ansprüche 1 bis 4,
**dadurch gekennzeichnet, dass** es einen Schlitz (29; 59) aufweist, der sich in der Lasche (27; 57) sowie in einem Abschnitt (26; 52) des Körpers (21; 51), der sich in der Nähe dieser Lasche (27; 57) befindet, erstreckt, durch welchen hindurch die Betätigungszunge (30; 60) zugänglich ist.

6. Zusatzteil (20; 50) nach einem der Ansprüche 1 bis 5,
**dadurch gekennzeichnet, dass** die Betätigungszunge (30; 60) Greifmittel aufweist.

7. Zusatzteil (20; 50) nach Anspruch 6,
**dadurch gekennzeichnet, dass** die Greifmittel zumindest eine Öffnung (31; 61) zum Einführen der Spitze eines Werkzeugs aufweisen.

8. Zusatzteil (20; 50) nach Anspruch 6,
**dadurch gekennzeichnet, dass** die Greifmittel zumindest eine Anlagerippe zum Anlegen der Spitze eines Werkzeugs aufweisen.

9. Zusatzteil (20; 50) nach Anspruch 6,
**dadurch gekennzeichnet, dass** die Greifmittel einen Rücksprung aufweisen, der manuell ergriffen werden kann.

10. Zusatzteil (20; 50) nach einem der Ansprüche 1 bis 9,
**dadurch gekennzeichnet, dass** die Lasche (27; 57) auf jeder ihrer Seitenflächen eine Randleiste (27C; 57C) zum Anlegen eines Fingers trägt, um die Lasche (27; 57) in den Aufnahmeraum der Längswand (12; 40) einrastend einzusetzen.

11. Zusatzteil (20; 50) nach einem der Ansprüche 1 bis 10,
**dadurch gekennzeichnet, dass** in Ruhestellung die Lasche (27; 57) sich schräg zum Körper (21; 51) erstreckt und die Betätigungszunge (30; 60) im Wesentlichen parallel zum Körper (21; 51) verläuft und dabei einen spitzen Winkel mit der Lasche (27; 57) einschließt.

12. Zusatzteil (20; 50) nach einem der Ansprüche 1 bis 11,
**dadurch gekennzeichnet, dass** die Lasche (27; 57) einstückig mit dem Zusatzteil ausgebildet ist.

13. Zusatzteil (20; 50) nach einem der Ansprüche 1 bis 12,
**dadurch gekennzeichnet, dass** der Körper (21; 51) sich insgesamt quer zur Längsachse (X) des Sockels des Kabelkanals (10) erstreckt.

14. Zusatzteil (20) nach Anspruch 13,
**dadurch gekennzeichnet, dass** der Körper (21) zwischen zwei Längswänden (12) des Sockels des Kabelkanals (10) verläuft, er an seinem anderen Ende eine Nase (23, 23') aufweist, die sich unter einem Rücksprung einer der beiden Längswände (12) verhaken kann.

15. Zusatzteil (50) nach Anspruch 13,
**dadurch gekennzeichnet, dass** der Körper (51) zwischen zwei Längswänden (12) des Sockels des Kabelkanals (10) verläuft, er an seinem anderen Ende die Lasche (57) aufweist, die mit ihrer Betätigungszunge (60) versehen ist.

16. Baugruppe mit einem Sockel eines Kabelkanals (10) und mit einem Zusatzteil (20; 50) nach einem der Ansprüche 1 bis 15, das stellenweise an eine Längswand (12; 40) des Sockels angefügt werden kann, wobei die Wand dazu einen Aufnahmeraum aufweist, der zwischen einer an einer Innenfläche (12A) der Längswand (12; 40) vorgesehenen Längsrippe (15; 45; 42) einerseits und der rechtwinkligen, unteren Fläche (14A; 44A) eines abgewinkelten Rücksprungs (14; 44) der Längswand (12; 40) andererseits definiert ist.
